# EUROPÄISCHE PATENTSCHRIFT

(11) **EP 0 736 723 B1**
(45) Veröffentlichungstag und Bekanntmachung des Hinweises auf die Patenterteilung: **21.07.1999**
(21) Anmeldenummer: 96104599.4
(22) Anmeldetag: 22.03.1996
(51) Int. Cl.: F16L 59/02, D04H 13/00, B32B 5/26

(54) **Rollbare Wärmedämmung auf Basis vollsynthetischer Fasern**
Rollable heat insulation based on totally synthetic fibers
Isolation thermique roulable à base de fibres entièrement synthétiques

(30) Priorität: 05.04.1995 DE 19512767
(43) Veröffentlichungstag der Anmeldung: 09.10.1996
(73) Patentinhaber: Hoechst Trevira GmbH & Co. KG, 65929 Frankfurt am Main (DE)
(72) Erfinder: Borger, Heinz-Werner, 86399 Bobingen (DE); Knobloch, Peter, Dr., 86845 Grossaitingen (DE)
(74) Vertreter: Luderschmidt, Schüler & Partner GbR

(56) Entgegenhaltungen:
- EP-A- 0 364 194
- EP-A- 0 585 626
- DE-A- 2 157 904
- DE-A- 4 012 718
- US-A- 4 695 338

## Beschreibung

Beschrieben wird ein Wärmedämm-Material, das aus vollsynthetischen Fasern besteht. Diese Wärmedämmung ist rollbar, erfüllt die Anforderungen der Baustoff-Klasse B1 nach DIN 4102, Teil 1, und besitzt eine gemäß DIN 4108, Teil 1, bestimmte Wärmeleitfähigkeit von kleiner 0,04 W/m*K und ist als Einstoffsystem recyclebar.

Rollbare Wärmedämm-Materialien auf Basis mineralischer Fasern, z. B. Steinwolle, und Bindern auf Basis von Phenolharzen sind bekannt. Bekannt sind ferner eine Reihe von Wärmedämm-Materialien, die auf Fasern natürlichen Ursprungs aufbauen, wie z. B. cellulosischen Fasern oder Wolle. Hier sind vielfach Zusätze nötig, um die Produkte ausreichend vor Beeinträchtigung durch Freßschäden und durch Fäulnis zu schützen. Darüber hinaus sind vielfach Zusätze zur günstigen Beeinflussung des Brandverhaltens notwendig.

Die Deutsche Offenlegungsschrift 1 938 930 beschreibt ein Verfahren zur Herstellung von Dämm-Matten von aus synthetischen Fasern bestehenden Abfällen. Beschrieben werden die Stufen Vliesbildung und thermische Verfestigung mit Hilfe eines thermoplastischen Bindemittels. Als besonders vorteilhaft wird herausgestellt der Einsatz von Faserabfällen in Form von Polyester, Polyamid und aus einem Gemisch derselben. Als Bindemittel werden Polyamid in Faserform und pulverförmige thermoplastische Binder, wie Polyethylen, sowie Phenolharze empfohlen. Hinweise auf recyclefähige Einstoffsysteme sind der Offenlegungsschrift nicht zu entnehmen.
Darüber hinaus enthält das Dokument keine Hinweise auf eine der DIN 4108, Teil 1, entsprechende Warmeleitfähigkeit von kleiner 0,04 W/m*K gekoppelt mit einem der Baustoff-Klasse B1 (DIN 4102, Teil 1) entsprechenden Brandverhalten.

Das deutsche Gebrauchsmuster G 88 07 017.4 beschreibt ein Polsterteil mit einer Vlies beinhaltenden Polsterfüllung, die ausschließlich aus einem voluminösen Vliesstoff besteht, wobei dieser Vliesstoff Bindefasern, insbesondere Kernmantelfasern, enthält. Ferner sei dieser Bindefaser-Vliesstoff preßgeformt, so daß er wenigstens in Teilbereichen ein Relief aufweist. Hier geht es also um die Kombination einer Normalfaser, beispielsweise auf Basis von Polyester, und einer Bindefaser, beispielsweise Polyester im Kern, ummantelt mit Copolyester. Aufgabe ist es ein Polsterteil bereitzustellen, dem durch den Vorgang des nicht homogenen Preßformens eine Struktur mitgegeben wird. Hinweise auf eine der DIN 4108, Teil 1, entsprechende Warmeleitfähigkeit von kleiner 0,04 W/m*K gekoppelt mit einem der Baustoff-Klasse B1 (DIN 4102, Teil 1) entsprechenden Brandverhalten sind dem Dokument nicht zu entnehmen. Darüber hinaus enthält das Gebrauchsmuster keine Hinweise auf recyclefähige Einstoffsysteme.

Die Europäische Patentanmeldung 0 469 309 beschreibt eine Faserstuktur auf der Basis von Polyester-, Polyamid- oder Polyolefinfasern, die im wesentlichen aus einer Polyester- oder Polyolefinfaser besteht, und eine weitere Komponente enthält. Bei dieser weiteren Komponente kann es sich wahlweise um eine Mehrkomponentenfaser handeln, die eine identische Zusammensetzung hat wie die erste Faser, oder aber alternativ um ein thermoplastisches Polymerpulver. Beschrieben wird ein Verfahren zur Herstellung von Matten aus diesen Faserstrukturen. Diese Matten sind dann Ausgangsprodukt für Formteile im Fahrzeugbau. Die Mehrkomponentenfaser oder das Polymerpulver übernehmen die Aufgabe, die Fasern der ersten Komponente miteinander zu verbinden und so die gewünschte Steifigkeit herbeizuführen. Hinweise auf ein rollbares Wärmedämm-Material, welches eine Wärmeleitfähigkeit von kleiner 0,04 W/m*K bestimmt gemäß der DIN 4108, Teil 1, gekoppelt mit einem der Baustoff-Klasse B1 (DIN 4102, Teil 1) entsprechenden Brandverhalten besitzt, sind dem Dokument nicht zu entnehmen.

In der EP-0 585 626 A1 wird eine kaschierte Mineralfasermatte beschrieben, die ein- oder beidseitig mit einer Kaschierung aus einem Synthesefaservliesstoff kaschiert ist. Der Synthesefaservliesstoß hat ein Flächengewicht von 10-100 g/m² und ist aus Polyesterträger und Polyesterbindehsern hergestellt. Die dort beschriebene kaschierte Mineralfasermatte ist nicht recycelbar wie die rollbare Wärmedämmung gemäß der Erfindung. Hinweise, aus Polyestervliesen eine recycelbare Wärmedämmung mit einer Wärmeleitfähigkeit von < 0,04 W/m*K sind in dieser Schrift nicht zu finden.

In der EP-O 364 194 A2 werden Isoliermaterialien beschrieben, die aus Endlosfäden eines synthetischen Materials hergestellt sind. Das synthetische Material kann auch Polyester sein. Wie aus Tabelle 2 dieser europäischen Patentanmeldung ersichtlich ist, kann die Wärmeleitfähigkeit auch kleiner als 0,04 W/m*K sein. Hinweise, ein Wärmedämmaterial auf Basis von Träger- und Bindefasern herzustellen, das recycelbar ist und das Träger- und Bindefasern aus einer Substanzklasse enthält, sind dieser europäischen Patentanmeldung nicht zu entnehmen.

Es bestand daher die Aufgabe, eine Wärmedämmung bereitzustellen, die rollbar ist, eine Wärmeleitfähigkeit von kleiner 0,04 W/m*K bestimmt gemäß der DIN 4108, Teil 1, gekoppelt mit einem der Baustoff-Klasse B1 (DIN 4102, Teil 1) entsprechenden Brandverhalten besitzt und darüber hinaus aus einem Einstoffsystem aus vollsynthetischem Fasermaterial besteht, so daß sie recyclefähig ist.

Gegenstand der Erfindung ist eine rollbare Wärmedämmung aus synthetischem Fasermaterial, welche eine Wärmeleitfähigkeit von maximal 0,04 W/m*K bestimmt gemäß DIN 4108, Teil 1 und ein gemäß der Baustoff-Klasse B1 entsprechendes Brandverhalten bestimmt gemäß der DIN 4102, Teil 1 besitzt, wobei die rollbare Wärmedämmung als Einstoffsystem kreislauffähig ist und das vollsynthetische Fasermaterial aus Träger- und Bindefasern aus einer Substanzklasse, nämlich aus Polyester, bevorzugt aus Polyethylenterephthalat aufgebaut ist, wobei die Bindefasern zumindest an Teilen der Oberfläche aus einem Polyester mit einem Schmelzpunkt bestehen, der unter dem Schmelzpunkt der Trägerfasern liegt.

Bindefasern aus Polyester, bevorzugt aus Polyethylenterephthalat aufgebaut ist, wobei die Bindefasern zumindest an Teilen der Oberfläche aus einem Polyester mit einem Schmelzpunkt bestehen, der unter dem Schmelzpunkt der Trägerfasern liegt.

Als Trägerfasern sind alle schmelzspinnbaren Polyester geeignet. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind schmelzspinnbare Polyestermaterialien, die zu mindestens 85 mol% aus Polyethylenterephthalat besteht. Die restlichen 15 mol% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z.B. von Propandiol oder Butandiol, von Di- oder Triethylenglycol oder, sofern in geringer Menge vorhanden, von Polyglycol mit einem Molgewicht von ca. 500 bis 2000. Besonders bevorzugt sind Polyester, die mindestens 95 mol% Polyethylenterephthalat enthalten, insbesondere solche aus unmodifiziertem PET.
Die Trägerfasern können als Stapelfaser vorliegen, wobei die Stapellänge über einen weiten Bereich streuen kann. Im vorliegenden Fall können auch sogenannte Recyclingfasern, d.h. Stapelfasern, die aus Faserresten mittels eines kombinierten Schneid- und Reißvorgangs hergestellt werden, eingesetzt werden.
Eine weitere Möglichkeit, sich derartige Fasern zugänglich zu machen, besteht darin, Reste aus der Ver- und Bearbeitung von Synthesefasern, die sortenrein sind, in bekannter Weise aufzuschmelzen, die Schmelze gegebenenfalls zu filtrieren und zu entgasen und das Produkt erneut zu granulieren. Die aus einem solchen Granulat ersponnenen Fasern sind möglicherweise nicht mehr mit dem ursprünglichen Ausgangsprodukt qualitativ vergleichbar, genügen aber den hier gestellten Anforderungen. In bekannter Weise kann die Bildung des Granulates umgangen werden, indem unmittelbar aus der Schmelze gesponnen wird.

Die verwendeten Polyester haben ein Molekulargewicht entsprechend einer intrinsischen Viskosität (IV), gemessen in einer Lösung von 1 g Polymer in 100 ml Dichloressigsäure bei 25°C, von 0,6 bis 1,4.

Als Binderfasern sind alle schmelzspinnbaren Polymermatierialien geeignet deren Schmelz- oder Erweichungstemperatur unterhalb der Schmelz- oder Erweichungstemperatur der Trägerfasern liegt sofern es sich um Fasern der gleichen Substanzklasse handelt.Bevorzugt handelt es sich bei den Binderfasern um schmelzspinnbare Polyester deren Schmelz- oder Erweichungstemperatur mit Hilfe von Modifizierungen oder Zusätzen, gegenüber dem Schmelz- oder Erweichungstemperatur der Trägerfaser, welche ebenfalls aus schmelzspinnbarem Polyester besteht, herabgesetzt wurde. Die Binderfasern können auch als sogenannte Kernmantelfasern, d.h. im Falle von Polyester bzw. Polyethylenterephthalat kann der Außenbereich beispielsweise durch die Modifzierung mit Isophthalsäure im Schmelzpunkt herabgesetzt sein, vorliegen. Darüber hinaus sind sämtliche Kostruktionen - wie bei Bikomponentenfasern üblich - denkbar. Zusätzlich können auch die Binderfasern zur Verbesserung des Brandschutzverhaltens einen flammhemmenden Zusatz enthalten. Die Binder- und die Trägerfaser gehören zur gleichen Substanzklasse. Die Binderfasern liegen als Stapelfaser vor, wobei die Stapellänge über einen weiten Bereich streuen kann. Im vorliegenden Fall können auch sogenannte Recyclingfasern, d.h. Stapelfasern, die aus Faserresten mittels eines kombinierten Schneid- und Reißvorgangs hergestellt werden, eingesetzt werden.
Eine weitere Möglichkeit, sich derartige Fasern zugänglich zu machen, besteht darin, Reste aus der Ver- und Bearbeitung von Synthesefasern, die sortenrein sind, in bekannter Weise aufzuschmelzen, die Schmelze gegebenenfalls zu filtrieren und zu entgasen und das Produkt erneut zu granulieren. Die aus einem solchen Granulat ersponnenen Fasern sind möglicherweise nicht mehr mit dem ursprünglichen Ausgangsprodukt qualitativ vergleichbar, genügen aber den hier gestellten Anforderungen. In bekannter Weise kann die Bildung des Granulates umgangen werden, indem unmittelbar aus der Schmelze gesponnen wird.

Der Anteil an Binderfasern - bezogen auf Trägerfasern - beträgt bis zu 50 Gew.-%, bevorzugt 30 bis 50 Gew.-%. Falls die Binderfaser als Bikomponenetenfaser, z.B. als Kern-Mantel-Faser, vorliegt, beträgt der Anteil 15 bis 60 Gew.-%, bevorzugt 30 bis 60 Gew.-%.

Die erfindungsgemäße Wärmedämmung besteht vorzugsweise aus einem aus den vorstehend beschriebenen Träger- und Binderfasern aufgebautem Vlies. Die Verfestigung des zugrundeliegenden Vliesstoffes erfolgt thermisch mit Heißluft. Dabei liegt die Temperatur der durch das Vlies geblasenen Heißluft oberhalb des Schmelzpunktes, zumindest oberhalb des Erweichungsbereiches, der niedrig schmelzenden Komponente (Bindefaser). Darüber hinaus können auch andere vliesverfestigende Maßnahmen, beispielsweise Mikrowellen-Bestrahlung angewendet werden.

Die Dicke der erfindungsgemäßen Wärmedämmung liegt zwischen 30 und 200 mm, bevorzugt zwischen 80 und 160 mm. Das Flächengewicht beträgt zwischen 400 und 3000 g/m², bevorzugt 1000 bis 3000 g/m2. Die Dichte beträgt zwischen 15 und 50 kg/m³, bevorzugt zwischen 20 und 30 kg/m³.

Die erfindungsgemäße Wärmedämmung besteht aus Träger- und Bindefasern, welche zu einer Substanzklasse gehörig sind. Damit ist ein wesentlicher Beitrag zur Kreislauffähigkeit geleistet. Die vollsynthetischen Träger- und Bindefasern benötigen keine Zusätze gegen Schimmelpilzbefall und gegen Freßschäden.

In einer weiteren Ausführungsform der Erfindung ist eine einseitige oder auch beidseitige Oberflächenverdichtung der Wärmedämmung, z.B. durch Kaschierung, möglich. Bei dieser Kaschierung handelt es sich um ein Gewebe, Gewirke, Gelege, Gestrick, Vlies, Spinnvlies oder um eine Folie der gleichen Substanzklasse aus der auch die Träger- und Bindefasern bestehen, so daß die Stoffeinheitlichkeit und die Recyclebarkeit erhalten bleiben.
Die Befestigung der Kaschierung erfolgt mittels der vorhandenen oder zusätzlichen Bindefaser der gleichen Substanzklasse wobei die zusätzlichen Bindefasern einen reduzierten Schmelzpunkt besitzen.
Falls erforderlich kann die Befestigung der Kaschierung auch durch einen Nadelprozeß erfolgen oder aber zusätzlich zur vorstehend beschrieben Bindefaser-Befestigung unterstützend erfolgen. Vorzugsweise erfolgt die Kaschierung im gleichen Prozeßschritt in dem die Verfestigung der rollbaren Wärmedämmung erfolgt.

Die Herstellung der Wärmedämmung umfaßt die Maßnahmen:
a) Ablage der vollsynthetischen Träger- und Bindefasern auf einem Förderband unter Ausbildung eines Vlieses,
b) thermische Behandlung des gemäß a) erhaltenen Vlieses in einer solchen Weise, daß der Binder eine Verfestigung des Vlieses bewirkt, und gleichzeitig eine Reduktion der Vlies-Dicke erfolgt,
c) Abkühlung des gemäß b) erhaltenen Vlieses.

Die gemäß Verfahrensschritt a) eingesetzten Träger- und Bindefasern werden mittels geeigneter Vliesbildungsmaßnahmen auf dem Transportband abgelegt, wobei die Verwendung des Binders in Form einer Faser, nicht in Form eines Pulvers, dazu führt, daß ein prozeßbedingtes Absetzen bzw. jegliche Entmischung beider Komponenten verhindert wird. Die Bindermenge, hier als Bindefaser eingesetzt, kann dadurch minimiert werden. In der Regel wird dies die teurere der beiden Komponenten sein. Auf diese Weise wird ein günstiger Einfluß auf die Kosten der rollbaren Wärmedämmung erzielt. Nachdem das Endprodukt hier eine rollbare Wärmedämmung sein soll, sind die Anforderungen bezüglich textiltechnologischer Daten an die einzusetzenden Fasertypen entsprechend gering. Auch dies bedeutet einen günstigen Einfluß auf die Kosten. Lediglich eine wirtschaftliche Vliesbildung muß ermöglicht werden. Deshalb bietet sich an, als tragende Fasern sogenannte Recyclingfasern einzusetzen, wie sie beispielsweise die Firma Polywert aus konventionellen Faserresten über einen kombinierten Schneid- und Reißvorgang herstellt. Die breite Stapellängenverteilung mit einem geringen Anteil von extrem kurzen Fasern und einem Überlängenanteil ist hier nicht störend. An die Bindefaser-Komponente, also beispielsweise eine Bikomponentenfaser, können besonders geringe Anforderungen gestellt werden. Hier kann ebenso mit einer Recyclingfaser auf Basis von Resten gearbeitet werden, so wie oben beschrieben.

Die thermische Behandlung gemäß Verfahrensschritt b) erfolgt mittels Heißluft, wobei deren Temperatur so gewählt wird, daß ein Erweichen bzw. An- oder Aufschmelzen der Bindefaser ermöglicht wird. Die genaue Temperatur hängt somit von dem eingesetzten Binder ab. Mit der Heißluft-Behandlung einhergehend ist eine Verdichtung des Vlieses zu beobachten und auch gewünscht. Der Grad der Verdichtung ist von der gewählten Heißluftgeschwindigkeit, vom Eigengewicht des Vlieses und vom Abstand der Heißluftdüse zur Oberfläche des Vlieses abhängig. Gleichzeitig mit der thermischen Verfestigung kann auch die Kaschierung erfolgen.

Der hier beschriebene Wärmedämmstoff auf Basis vollsynthetischen Fasermaterials ist kreislauffähig, weil erfindungsgemäß beide Komponenten ein und derselben Substanzklasse angehören. Darüber hinaus besteht die Möglichkeit, Reste aus der Herstellung derartigen Vliesstoffes, Reste aus der Verarbeitung und auch das Produkt nach Gebrauch in an sich bekannte Kreislaufprozesse einzuschleusen. Es bietet sich auch folgende Möglichkeit: Das obige Produkt kann aufgeschmolzen werden und in geeigneter Form erneut in Granulat überführt werden. Dieses Granulat wird erneut zur Faser ausgesponnen, bzw. unter Umgehung der Granulatstufe wird das obige Produkt erneut aufgeschmolzen. Dadurch, daß hier zwei Komponenten unterschiedlichen Schmelzpunktes einer Substanzklasse zugrunde liegen, ist mit einer Schmelzpunktreduktion zu rechnen, so daß die so erhaltene Faser als Binde- bzw. Klebefaser in dem gleichen Prozeß eingesetzt werden kann. Auf diese Weise lassen sich die günstigen Eigenschaften einer rollbaren Wärmedämmung auf Basis von vollsynthetischem Fasermaterial, beruhend auf einer Substanzklase, voll verbinden mit besonders kostengünstiger Herstellung und Kreislauffähigkeit.

Die mittels des vorstehend beschriebenen Verfahrens hergestellte Wärmedämmung zeigt ein Brandverhalten gemäß der Baustoff-Klasse B1 (nach DIN 4102, Teil 1). Darüber hinaus besitzt sie eine Wärmeleitfähigkeit von kleiner 0,04 W/m*K bestimmt gemäß DIN 4108, Teil 1.

Das nachfolgende Beispiel soll obige Überlegungen noch deutlicher machen:

Ausgangsmaterial sind Polywert Faser Typ B und Polywert Faser Typ C der Firma Polywert. Diese beiden Fasern sind wie folgt definiert: Beides sind Polyester Fasern. Polywert Faser Typ B besteht zu 100 % aus Fasern auf Basis von Polyethylenterephthalat. Reste verschiedener Fasertypen wurden über einen Reißprozeß bezüglich Öffnung und Stapellänge einander angeglichen und so das Produkt Polywert Faser Typ B erhalten. Den Mantel von Polywert Faser Typ C bildet ein Polyester mit reduziertem Schmelzpunkt. Der Erweichungsbereich des Mantels liegt im Bereich um 115°C - 125°C. Auch hier wurden Reste über zwei Reißtamboure bezüglich Stapellänge und Aufmachung homogenisiert und so das Produkt Polywert Faser Typ C erhalten.

Beide Faserqualitäten werden im Verhältnis 70:30 Polywert Faser Typ B zu Polywert Faser Typ C auf einer Krempel vorgelegt und als Vlies abgelegt. Das Flächengewicht liegt bei 1.600 g/m², die Rohdicke liegt bei ca. 80 mm. Das Vlies durchläuft eine Heißluftpassage. Die Förderung erfolgt durch ein unten liegendes Förderband. Heißluft wird von oben zugeführt. Die Temperatur der Luft liegt bei 150°C, die Dicke des Dämmaterials nach Abkühlung beträgt 60 mm. Dickenreduktion und Verdichtung erfolgen durch die Luftgeschwindigkeit, das Eigengewicht und den Abstand zwischen den oben liegenden Heißluftdüsen und dem unten befindlichen Förderband.

Das abgekühlte Produkt ist von besonders großer Homogenität. Es ist rollbar. Es hat einen inneren Zusammenhalt, der eine vergleichbare Verarbeitung ermöglicht wie konventionelle rollbare, faserige Wärmedämmaterialien. Die Wärmeleitfähigkeit nach DIN 4108, Teil 1, liegt im Bereich 0,035-0,04 W/m*K. Das Produkt entspricht damit der Wärmeleitgruppe WLG 040. Das Brandverhalten entspricht dem der Baustoff-Klasse B1 (nach DIN 4102, Teil 1). Die Dichte liegt bei 27 kg/m³.

Ähnliche Ergebnisse werden erhalten, wenn anstelle Polywert Faser Typ B eine sogenannte Füllfasertype eingesetzt wird. Dabei handelt es sich um Fasern auf Basis von Polyethylenterephthalat, welche infolge starker Kräuselung ein großes Volumen aufweisen.

Ähnliche Ergebnisse werden erhalten, wenn anstelle der Bikomponentenfaser eine Polyesterfaser mit reduziertem Schmelzpunkt eingesetzt wird. Die gleiche Wärmeleitfähigkeit bestimmt nach DIN 4108, Teil 1, von kleiner 0,04 W/m*K (WLG 040), ebenso wie die Einordnung in die Baustoff-Klasse B1 (nach DIN 4102, Teil 1), wird erreicht, wenn die Dicke im Bereich von 40-200 mm variiert und wenn die Dichte im Bereich von 20-50 kg/m³ variiert wird.

Das Mischungsverhältnis zwischen Polywertfaser Type B und Polywert Faser Type C kann in einem weiten Bereich variiert werden, z.B. im Bereich von 15-40 % an Polywert Faser Type C. Nachdem es sich bei der Type C um die in der Regel teurere Type handelt, empfiehlt es sich, diesen Anteil zu minimieren und den Bereich von 15-30 % vorzuziehen.

Wird als Bindefaser keine Bikomponentenfaser, z.B. Kernmantelfaser, benutzt, sondern zu 100 % eine Faser mit reduziertem Schmelzpunkt eingesetzt, kann der Anteil dieser Faser weiter gesenkt werden auf bis zu 10 %.

Die Einstellung des Mischungsverhältnisses beider Faserkomponenten und die Vliesbildung erfolgen mit Hilfe der wirtschaftlichsten am Markt verfügbaren Verfahren.

## Patentansprüche

1. Rollbare Wärmedämmung aus synthetischem Fasermaterial, welche eine Wärmeleitfähigkeit von maximal 0,04 W/m*K bestimmt gemäß DIN 4108, Teil 1 und ein gemäß der Baustoff-Klasse B1 entsprechendes Brandverhalten bestimmt gemäß der DIN 4102 Teil 1 besitzt, wobei die rollbare Wärmedämmung als Einstoffsystem kreislauffähig ist und das voll synthetische Fasermaterial aus Träger- und Bindefasern aus einer Substanzklasse, nämlich aus Polyester, bevorzugt aus Polyethylenterephthalat aufgebaut ist, wobei die Bindefasern zumindest an Teilen der Oberfläche aus einem Polyester mit einem Schmelzpunkt bestehen, der unter dem Schmelzpunkt der Trägerfasern liegt.

2. Rollbare Wärmedämmung nach Anspruch 1, dadurch gekennzeichnet, daß als Bindefaser eine Bikomponentenfaser eingesetzt wird.

3. Rollbare Wärmedämmung nach Anspruch 1, dadurch gekennzeichnet, daß die als zweite Faserkomponente ausgebildete Bindefaser eine Faser mit gegenüber der als ersten Faserkomponente ausgebildeten Trägerfaser reduziertem Schmelzpunkt eingesetzt wird.

4. Rollbare Wärmedämmung nach Anspruch 1, dadurch gekennzeichnet, daß zumindest eine der beiden Faserkomponenten bestehend aus Träger- und Bindefasern eine Faser ist, die aus Faserresten besteht.

5. Rollbare Wärmedämmung nach Anspruch 1, dadurch gekennzeichnet, daß zumindest eine der beiden Faserkomponenten bestehend aus Träger- und Bindefasern aus Faserresten besteht, die über einen Reißprozeß oder einen kombinierten Schneid- und Reißprozeß für diesen Einsatz vorbereitet werden.

6. Rollbare Wärmedämmung nach Anspruch 1, dadurch gekennzeichnet, daß die Dicke dieser rollbaren Wärmedämmung zwischen 30 und 200 mm, bevorzugt zwischen 80 und 160 mm liegt.

7. Rollbare Wärmedämmung nach Anspruch 1, dadurch gekennzeichnet, daß das Flächengewicht der Wärmedämmung zwischen 400 und 3000 g/m², bevorzugt zwischen 1000 und 3000 g/m² liegt.

8. Rollbare Wärmedämmung nach Anspruch 1, dadurch gekennzeichnet, daß die Dichte dieser Wärmedämmung zwischen 15 und 50 kg/m³, bevorzugt zwischen 20 und 30 kg/m³ liegt.

9. Rollbare Wärmedämmung nach Anspruch 1, dadurch gekennzeichnet, daß mindestens eine der beiden Faserkomponenten bestehend aus Träger- und Bindefasern aus einem hochpolymeren Material mit Hilfe eines Schmelzspinnprozesses hergestellt wurde, wobei das hochpolymere Ausgangsmaterial aus Resten aus der Faserherstellung und/oder aus bereits ersponnener Faser gewonnen wurde.

10. Rollbare Wärmedämmung nach Anspruch 1, dadurch gekennzeichnet, daß mindestens eine Seite der Wärmedämmung mit einer Kaschierung der gleichen Substanzklasse, aus der auch die Träger- und Bindefasern bestehen, versehen ist.

## Claims

1. A rollable heat insulation from synthetic fibre material and having a heat conductivity of not more than 0 4 W/m*K, determined according to DIN 4108, Part 1, and a behaviour-in-fire rating corresponding to Class B1 Structural Material, determined according to DIN 4102, Part 1, whereby the rollable heat insulation is recyclable as a single-component system and the totally synthetic fibre material consisting of carrier and bonding fibres is built up from a class of substances, namely polyester and preferably from polyethylene terephthalate, the bonding fibres consisting at least on parts of the surface of a polyester having a melting point which is below the melting point of the carrier fibres.

2. A rollable heat insulation according to claim 1, characterised in that a bicomponent fibre is used as the bonding fibre.

3. A rollable heat insulation according to claim 1, characterised in that the bonding fibre used as the second fibre component is a fibre having a melting point which is lower than that of the carrier fibre which is constructed as the first fibre component.

4. A rollable heat insulation according to claim 1, characterised in that at least one of the two fibre components consisting of carrier and bonding fibres is a fibre which consists of fibre residues

5. A rollable heat insulation according to claim 1, characterised in that at least one of the two fibre components consisting of carrier and bonding fibres consists of fibre residues which are prepared for this use by a tearing process or a combined cutting and tearing process.

6. A rollable heat insulation according to claim 1, characterised in that the thickness of this rollable heat insulation is between 30 and 200 mm and preferably between 80 and 160 mm.

7. A rollable heat insulation according to claim 1, characterised in that the weight per unit of surface area of the heat insulation is between 400 and 3000 g/sq.m and preferably between 1000 and 3000 g/sq.m.

8. A rollable heat insulation according to claim 1, characterised in that the density of this heat insulation is between 15 and 50 kg/cu.m and preferably between 20 and 30 kg/cu.m.

9. A rollable heat insulation according to claim 1, characterised in that at least one of the two fibre components consisting of carrier and bonding fibres has been produced from a high polymer material by means of a melt spinning process, the high polymer starting material having been obtained from residues from the fibre production and/or from already spun fibres.

10. A rollable heat insulation according to claim 1, characterised in that at least one side of the heat insulation is provided with a lining of the same class of substances as that of which the carrier and bonding fibres consist.

## Revendications

1. Isolant thermique apte à l'enroulement constituée par une matière fibreuse synthétique qui possède une conductibilité thermique maximale de 0,04 W/m*K déterminée conformément à la norme DIN 4108, partie 1, et un comportement au feu correspondant à celui de la classe B1 des matériaux de construction, déterminé conformément à la norme DIN 4102, partie 1, dans lequel l'isolant thermique apte à l'enroulement manifeste une aptitude au recyclage à titre de système unitaire et la matière fibreuse de synthèse totale comprend des fibres de support et des fibres de liaison constituées d'une seule classe de substances plus précisément de polyester, de préférence de polyéthylènetéréphtalate, les fibres de liaison, au moins sur des parties de leurs surfaces, étant constituées par un polyester dont le point de fusion est inférieur au point de fusion des fibres de support.

2. Isolant thermique apte à l'enroulement selon la revendication 1, caractérisé en ce qu'on met en oeuvre, à titre de fibre de liaison, une fibre à deux composants.

3. Isolant thermique apte à l'enroulement selon la revendication 1, caractérisé en ce qu'on met en oeuvre, à titre de fibre de liaison réalisée sous la forme du second composant de fibre, une fibre possédant un point de fusion inférieur à celui de la fibre de support réalisée sous la forme du premier composant de fibre.

4. Isolant thermique apte à l'enroulement selon la revendication 1, caractérisé en ce qu'au moins un des deux composants de fibres constitués par des fibres de support et par des fibres de liaison représente une fibre qui est constituée par des résidus fibreux.

5. Isolant thermique apte à l'enroulement selon la revendication 1, caractérisé en ce qu'au moins un des deux composants de fibres constitués par des fibres de support et par des fibres de liaison est constitué par des résidus fibreux que l'on prépare via un procédé donnant lieu à la formation de fibres craquées ou via un procédé combiné donnant lieu à la formation de fibres découpées et de fibres craquées pour cette mise en oeuvre.

6. Isolant thermique apte à l'enroulement selon la revendication 1, caractérisé en ce que l'épaisseur de cet isolant thermique apte à l'enroulement se situe entre 30 et 200 mm, de préférence entre 80 et 160 mm.

7. Isolant thermique apte à l'enroulement selon la revendication 1, caractérisé en ce que le poids surfacique de l'isolant thermique apte à l'enroulement se situe entre 400 et 3000 g/m², de préférence entre 1000 et 3000 g/m².

8. Isolant thermique apte à l'enroulement selon la revendication 1, caractérisé en ce que la masse volumique de cet isolant thermique se situe entre 15 et 50 kg/m³, de préférence entre 20 et 30 kg/m³.

9. Isolant thermique apte à l'enroulement selon la revendication 1, caractérisé en ce qu'on prépare au moins un des deux composants de fibres constitués par des phases de support et par des fibres de liaison à partir d'une matière possédant une teneur élevée en polymères, à l'aide d'un procédé de filature en fusion, dans laquelle la matière de départ possédant une teneur élevée en polymère est obtenue à partir de résidus provenant de la fabrication de fibres et/ou de fibres déjà filées.

10. Isolant thermique apte à l'enroulement selon la revendication 1, caractérisé en ce qu'on munit au moins une face de l'isolant thermique d'un contrecollage de la même classe de substances que celle dont sont également constituées les fibres de support et les fibres de liaison.
